# EUROPEAN PATENT APPLICATION

(11) **EP 1 746 051 A1**
(43) Date of publication of application: **24.01.2007**
(21) Application number: 06117530.3
(22) Date of filing: 20.07.2006
(51) Int. Cl.: B65G 1/10, B65G 1/04

(54) **Movement device for a store**

(30) Priority: 21.07.2005 IT UD20050122
(71) Applicant: Wilsider srl, 06089 Torgiano (PG) (IT)
(72) Inventor: Ceccarelli, Gildo, 06087, Ponte S. Giovanni (PG) (IT)
(74) Representative: Petraz, Gilberto Luigi

(57) **Abstract**

Movement device (10) for a store provided with one or more shelves (12), each of which consists of a plurality of containing modules or baskets (13, 13a, 15, 15a), advantageously for elongated elements, such as metal bars or suchlike, disposed on several superimposed rows and defining a first level substantially on the floor and one or more levels above. The device (10) comprises a traction member (29) associated with each of the levels above, which displaces in a substantially horizontal direction one of the containing modules (13a, 15a) of the same level with respect to the containing modules (15, 13) of the levels below and/or above. The device (10) also comprises attachment members (23, 25) associated with each of the containing modules (13, 13a, 15, 15a) and which allow the selective attachment of one of the containing modules (13, 13a, 15, 15a) with an adjacent containing module (13, 13a, 15, 15a), in order to allow the simultaneous displacement thereof in groups when the traction member (29) is activated.

## Description

### FIELD OF THE INVENTION

The present invention concerns a movement device for a store to store products, particularly long products made of metal, plastic, wood, etc. The store to which the present invention is applied substantially consists of a plurality of containing baskets disposed on several superimposed rows so as to form at least a multi-level shelving. To be more exact, the movement device according to the invention allows to move the baskets of each level simply, quickly and without using lifting members, so as to take each of them, even the baskets which are at a lower level, to a pick-up condition where the baskets, or relative products, can easily be removed also from above, and in such a manner as to create the space to deposit new baskets, also from above or on lower levels, without having to lift and transfer the baskets above.

In the following description we shall refer specifically to stores with containing baskets containing mainly iron and steel products, such as bars, rolled, drawn or other products, divided for example according to type, size, weight or other, even though the invention is advantageously also applied in stores intended for the storage of products of any other sector, such as plastic profiles, profiles of wooden material or suchlike, food products, textiles, spare parts for automobiles, electronic components, or other.

### BACKGROUND OF THE INVENTION

Large-size stores are known, for storing goods, provided with a plurality of shelves, each of which consists of a plurality of containing baskets disposed on several superimposed rows, and each containing products with a weight and size that can even be very different from each other.

In known stores at least a bridge crane is also provided to allow to pick up the products, and at least a trolley that transports the picked up products outside the store or to a zone where the load is prepared.

One of the main disadvantages in the state of the art, in managing the loading and unloading operations in a store, is that, to pick up a desired quantity of products contained in a determined basket, or other type of container, which is in the lowest row, it is necessary to lift the basket or baskets above that basket, or in any case to pick up the content of the containers which are higher. To be more exact, the baskets above the one to be loaded or unloaded, or the material contained in the containers, are picked up by the bridge crane, temporarily put down on one side and, after the products have been picked up or unloaded, are repositioned, or not, in the initial position.

This disadvantage entails a considerable increase in the times and costs necessary to pick up the iron and steel products, due mainly to the laborious nature of the operations performed, and to the over-use of the bridge crane with consequent increase in the maintenance operations.

Moreover, in the state of the art, the building where the store is disposed must have a very high ceiling with respect to the shelves, so as to allow the baskets to be lifted above said shelves when they are moved.

Automatic or semi-automatic movement devices are also known, called "intelligent". However, these need specific equipment and members to be installed in the store, such as for example self-moving vehicles, the so-called mechanical mules, guided by a wire and/or assisted by a computer, and not commonly provided in stores for long metal products. These known devices are therefore very expensive and require long interventions for their installation and maintenance, and also high power in order to move the baskets or containers.

A purpose of the present invention is to achieve a movement device for a store which allows to move the baskets simply, quickly and economically and without using a bridge crane, selecting the level or levels concerned, and the baskets concerned, so as to free the space above the basket or the portion of floor on which it is desired to effect from above the pick-up or storage operations.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purpose, a movement device according to the present invention is applied to a store provided with one or more shelves, each of which consists of a plurality of containing modules or baskets, advantageously for elongated elements, such as metal bars or suchlike, which baskets are disposed on several superimposed rows, so as to define at least a first level substantially on the floor and one or more levels above.

According to a characteristic feature of the present invention, the movement device comprises at least a traction member, for example a cable, associated with each of the levels above, in order to displace, in a substantially horizontal direction, at least a containing module, for example by a determinate pitch, with respect to the containing modules of the levels below and/or above.

Moreover, the movement device according to the invention comprises attachment means, associated with each containing module, to allow the selective attachment of one containing module to an adjacent containing module, so as to allow the simultaneous displacement thereof in groups, when the traction member is activated.

In this way, groups of containing modules of the same row can be moved simultaneously and independently, in a substantially horizontal direction, so as to define an open space above the row below, in order to be able to pick up/load either the whole module below, or the elements or the products contained therein.

By doing this, also to pick up/load modules or products disposed on the lower levels or on the floor, the traditional operations of lifting, discharging and repositioning the modules above, or their contents, are not necessary, and relatively low power can be used, since it is sufficient to displace horizontally the modules of the various rows so as to align the open spaces above the module in which the products to be picked up are contained.

With the present invention, therefore, there is no need to use the bridge crane to move the modules, thus simplifying operations and consequently reducing both the times and costs of picking up the products.

A further advantage of the present invention is that it is possible to pick up the products from above directly with lifting members, for example a crane, a mechanical arm, a normal bridge crane or other, which are normally already present in a store for storing elongated metal products such as bars or suchlike, thus reducing the times and costs of installation of the device in existing stores.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic view of a lay-out of a store in which the movement device according to the present invention is applied;
- fig. 2 is a lateral view of a shelf in the store in fig. 1;
- fig. 3 is a front view of the shelf in fig. 2;
- figs. 4a and 4b show respectively a first enlarged detail of fig. 2, in a first and in a second operating condition;
- figs. 5a and 5b show respectively a second enlarged detail of fig. 2, in a first and in a second operating condition;
- figs. 6a and 6b show respectively a third enlarged detail of fig. 2, in a first and in a second operating condition;
- figs. 7a and 7b show respectively an enlarged detail of fig. 3, in a first and in a second operating condition.

### DETAILED DESCRIPTION OF A PREFERENTIAL FORM OF EMBODIMENT

With reference to the attached drawings, a movement device 10 according to the present invention is installed in a store 11, in this case for the storage of iron and steel products, such as metal bars, drawn, rolled or plane products, sheet metal, meshes or other elongated elements, having different sizes and weights, and not shown in the drawings.

The store 11 normally consists of a plurality of shelves 12, each consisting of a plurality of containing baskets for the products, disposed substantially parallel to each other on two or more superimposed rows which define different storage levels.

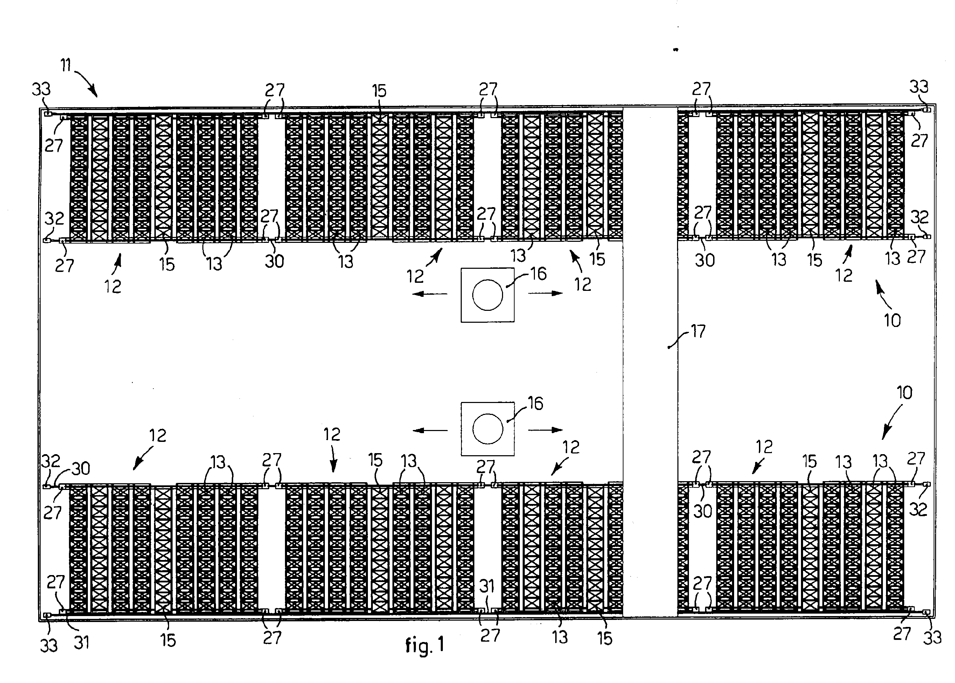

Simply to give a non-restrictive example, fig. 1 shows a possible lay-out of the store 11, in which eight shelves 12 are provided, disposed four by four facing each other.

In this case, for each shelf 12 nine upper baskets 13 are provided, to define an upper row, and nine lower baskets 15 to define a lower row. The iron and steel products can be stocked not only in the baskets 13 and 15, but also on the floor under the two rows, or another row of baskets can be provided, resting on the floor, in which said iron and steel products can be disposed.

The store 11 also comprises two transport trolleys 16 mobile along the shelves 12, and a pick-up bridge crane 17 which, in a substantially known manner, picks up the iron and steel products from the various baskets 13, 15, or the floor, in order to position them on the transport trolleys 16. Advantageously, the pick-up bridge crane 17 and/or the transport trolleys 16 comprise a dynamometer, of a known type and not shown in the drawings, which allows to quantify the iron and steel products picked up and to measure the weight thereof.

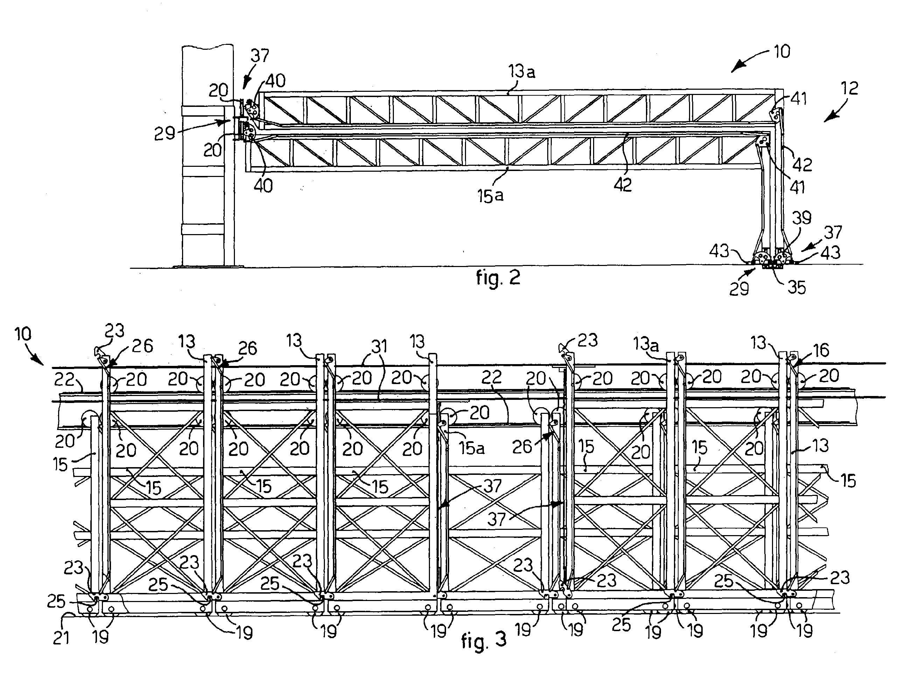

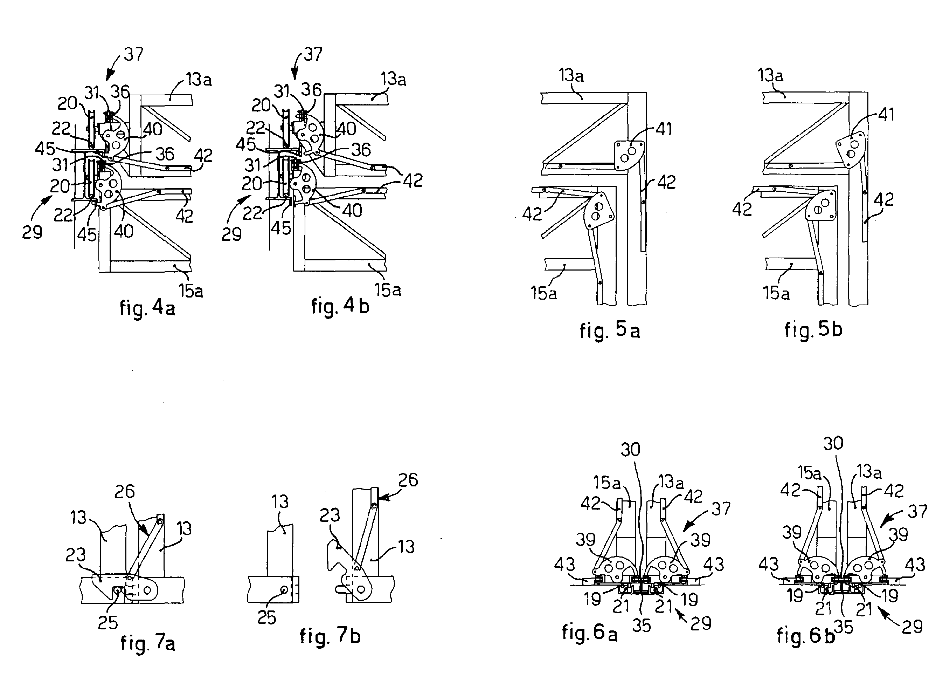

To be more exact, the movement device 10 comprises, associated with each upper basket 13 and with each lower basket 15, two pairs of sliding wheels, respectively lower 19 and lateral 20 (figs. 2 and 3), sliding along corresponding lower 21 and lateral 22 rails, so as to allow the guided sliding of each individual basket 13, 15.

Moreover, in proximity with the lower wheels 19 and the lateral wheels 20, respective hooks 23 and pins 25 (figs. 7a and 7b) of reciprocal attachment are associated, both to the upper baskets 13 and also to the lower baskets 15.

To be more exact, each hook 23 is pivoted to the relative basket 13, 15, so as to be able to be selectively positioned between a first lowered position (fig. 7a) in which it attaches a corresponding pin 25 of an adjacent basket 13, or 15, constraining the baskets 13, 15 to each other; and a second raised position (fig. 7b), in which it is released from the pin of the adjacent basket 13 or 15, thus releasing the baskets 13, 15 from each other.

The hooks 23 of the same basket 13, 15 are connected to each other by means of a return kinematism 26, advantageously consisting of a plurality of levers pivoted to each other, so that they can be taken simultaneously into said two positions.

Moreover, laterally to each shelf 12 end-of-travel elements 27 are provided (fig. 1), able to constrain the last baskets 13 and 15 of the respective rows in a lateral position. The end-of-travel elements 27 are disposed at a distance such as to allow ten baskets 13, 15 to be accommodated between them. In this way, since nine baskets 13, 15 are provided for each row, there is always a free space which allows access for the pick-up bridge crane 17 to pick up the iron and steel products disposed in the basket below, or on the floor.

The movement device 10 also comprises a movement unit 29, substantially consisting, for each of the lower and upper rows, of two movement cables, respectively lower 30 and lateral 31, disposed longitudinally to the shelves 12; four movement jacks, respectively two lower jacks 32 associated on opposite sides with the lower cable 30, and two lateral jacks 33 associated on opposite sides with the lateral cable 31; and two guide profiles, respectively a lower profile 35 associated with the lower cable 30 and a lateral profile 36 associated with the lateral cable 31.

In this way, by driving simultaneously the lower jack 32 and the lateral jack 33 disposed on the same side, the respective cables 30 and 31 are drawn in the same first horizontal direction and, in turn, the latter move the relative guide profiles 35 and 36 in said first horizontal direction. Vice versa, by driving the jacks 32 and 33 disposed on the opposite side, the direction of traction of the cables 30 and 31 is inverted, and consequently also the horizontal direction of movement of the guide profiles 35 and 36.

For every row of baskets 13, 15, the movement device 10 also comprises a drive basket 13a, 15a able to be selectively associated with the relative cables 30, 31, and able to move in guided manner, as will be explained in more detail hereafter, the baskets 13, 15 attached thereto.

Each drive basket 13a, 15a comprises, unlike the others, a constraint mechanism 37 (figs. 2, 4a, 4b, 5a, 5b, 6a and 6b) consisting substantially of a lower platelet 39, a lateral platelet 40, and a kinematism with levers 42.

The lower platelet 39 is shaped substantially like a half-moon and is pivoted to the relative drive basket 13a, 15a, in proximity with the lower wheels 19, so as to be able to be selectively rotated between a first position in which it is constrained to the lower profile 35, and a second position in which it is constrained to a lower block 43 attached to the floor.

The lateral platelet 40 is also shaped substantially like a half-moon and is pivoted to the relative drive basket 13a, 15a, in proximity with the upper wheels 20, so as to be able to be selectively rotated between a first position in which it is constrained to the lateral profile 36, and a second position in which it is constrained to a lateral block 45 attached in proximity with the respective lateral rail 22.

The lever kinematism 42 comprises not only a plurality of levers pivoted to each other, but also a return platelet 41 which allows to coordinate the rotation of the lower platelet 39 and of the lateral platelet 40, so that the latter are simultaneously in the first position or in the second position.

In this way, when both the lower 39 and lateral 40 platelets are in their first position, the respective drive baskets 13a and 15a are subject to the horizontal movement of the lower 35 and lateral 36 profiles, induced by the cables 30 and 31.

With the device 10 according to the present invention, by means of the hooks 23 and the pins 25, it is possible to attach together, partly to the end-of-travel elements 27 and partly to the relative drive basket 13a, a desired number of upper baskets 13, so as to move them simultaneously in groups and define an open space above one of the lower baskets 15 of the row below.

To be more exact, the space is defined between the baskets 13 constrained to the relative drive basket 13a, which as it moves by one step draws all the baskets 13 constrained to it by an equal measure, and the baskets 13 constrained to the relative end-of-travel element 27, which instead remain stationary. In this way, the pick-up bridge crane 17 is taken into correspondence with the defined space, and can thus access from above the iron and steel products contained in the lower basket 15. An opposite movement of the drive basket 13a closes the defined space and repositions all the baskets 13, so as thus to be able to define another suitable attachment combination of the baskets 13 to create a new space in a new position.

In the same way, by attaching a desired number of lower baskets 15, partly to the end-of-travel elements 27 and partly to the relative drive basket 15a, it is possible to move them simultaneously in groups with the same pitch, and define an open space above the floor to allow the pick-up bridge crane 17 to access from above the iron and steel products resting on it.

Obviously, access to the floor is allowed only if the open spaces defined in both rows are vertically aligned.

Advantageously, the movement device 10 comprises a safety member, not shown here, which allows to attach to the same cable 30, 31, on each occasion, only the drive baskets 13a or 15a of two adjacent shelves 12, so that the baskets 13 or 15 in movement remain within the field of vision of the operator, thus reducing the risk of causing accidental damage or accidents to things or persons, in zones that are not supervised.

It is clear that modifications and/or additions of parts may be made to the movement device 10 as described heretofore, without departing from the field and scope of the present invention.

For example, it comes within the field of the present invention to provide a command and control unit able to memorize the positioning of the various iron and steel products in the baskets 13, 15 or on the floor, and to automatically command the attachment and movement of the various baskets 13, 13a and 15, 15a so as to define the open space or spaces above the product to be picked up.

It also comes within the field of the present invention to provide that the hooks 23 and the pins 25 allow the reciprocal attachment of the baskets 13 and 15 of the two different rows, so as to be able to move simultaneously, and with a single drive basket 13a or 15a, groups formed by upper 13 and lower 15 baskets.

According to another variant, instead of the hooks 23 and the pins 25, attachment members of a magnetic type are provided, or a spring, or attachment members having the same shape, or other type.

According to another variant, advantageously applied to stores 11 for storing light or small-size products, the bridge crane 17 may not be provided, and the transport trolleys 16 are provided with a lifting arm which picks up the products from the baskets 13, 15.

In this case, since there is no need to intervene from above to lift the baskets 13, 15, it is possible to exploit to a greater height the building structure in which the store 11 is disposed, thus optimizing the spaces available.

It is also clear that, although the present invention has been described with reference to specific examples, a person of skill in the art shall be able to achieve many other equivalent forms of movement device for a store, having the characteristics as set forth in the claims and hence all coming within the field of protection defined thereby.

## Claims

1. Movement device for a store provided with one or more shelves (12), each of which consists of a plurality of containing modules or baskets (13, 13a, 15, 15a), advantageously for elongated elements, such as metal bars or suchlike, disposed on several superimposed rows and defining at least a first level substantially on the floor and one or more levels above, **characterized in that** it comprises at least a traction member (29) associated with each of said levels above, and able to displace in a substantially horizontal direction at least one of said containing modules (13a, 15a) of the same level with respect to said containing modules (15, 13) of the levels below and/or above, and attachment means (23, 25) associated with each of said containing modules (13, 13a, 15, 15a) and able to allow the selective attachment of one of said containing modules (13, 13a, 15, 15a) with an adjacent containing module (13, 13a, 15, 15a), in order to allow the simultaneous displacement thereof in groups when said traction member (29) is activated.

2. Device as in claim 1, **characterized in that** said traction member (29) comprises a plurality of movement cables (30, 31) disposed longitudinally to said shelves (12), a plurality of movement jacks (32, 33) associated on opposite sides with said movement cables (30, 31), and a plurality of guide profiles (35, 36) associated with said movement cables (30, 31).

3. Device as in claim 1 or 2, **characterized in that** each row of containing modules (13, 15) comprises at least a drive module (13a, 15a) able to be selectively associated with said traction member (29) by means of a constraint mechanism (37), in order to move the groups of containing modules (13, 15) of said row in guided manner.

4. Device as in claims 2 and 3, **characterized in that**, for each of said drive modules (13a, 15a), said constraint mechanism (37) comprises a pair of clamping elements (39, 40) able to be selectively taken between a first position in which they constrain the relative drive module (13a, 15a) to said guide profiles (35, 36), and a second position in which the relative drive module (13a, 15a) is constrained to a positioning block (43) attached to the floor.

5. Device as in any claim hereinbefore, **characterized in that**, for each of said containing modules (13, 13a, 15, 15a), said attachment means comprise a plurality of hook elements (23) and a corresponding plurality of pins (25), said hook elements (23) being able to cooperate selectively with respective pins (25) of an adjacent containing module (13, 13a, 15, 15a) in order to constrain together two or more of said containing modules (13, 13a, 15, 15a).

6. Device as in any claim hereinbefore, **characterized in that** each of said containing modules (13, 13a, 15, 15a) comprises sliding means (19, 20) able to slide along corresponding rail means (21, 22) so as to allow the guided sliding thereof.

7. Device as in any claim hereinbefore, **characterized in that** end-of-travel elements (27) are provided laterally to each of said shelves (12), to constrain in a lateral position the last of said containing modules (13, 13a, 15, 15a) of the respective rows.
